# EUROPÄISCHE PATENTSCHRIFT

(11) **EP 2 990 989 B1**
(45) Veröffentlichungstag und Bekanntmachung des Hinweises auf die Patenterteilung: **25.01.2017**
(21) Anmeldenummer: 14182499.5
(22) Anmeldetag: 27.08.2014
(51) Int. Cl.: G06K 7/10, H04B 5/00, G06K 7/00

(54) **Verfahren und Schreib-/Lesegerät zur Selektion eines drahtlosen Datenträgers**
Method and read/write apparatus for selecting a wireless tag
Méthode et appareil de lecture/écriture pour séléctionner une étiquette sans fil

(43) Veröffentlichungstag der Anmeldung: 02.03.2016
(73) Patentinhaber: Siemens Aktiengesellschaft, 80333 München (DE)
(72) Erfinder: Weinländer, Markus, 91230 Happurg (DE)

(56) Entgegenhaltungen:
- WO-A1-2011/135329
- US-A1- 2006 176 152

## Beschreibung

Die Erfindung betrifft ein Verfahren zur Selektion zumindest eines aus einer Anzahl erfasster drahtloser Datenträger gemäß dem Oberbegriff des Patentanspruchs 1, und ein Schreib-/Lesegerät zur Selektion eines drahtlosen Datenträgers gemäß dem Oberbegriff des Patentanspruchs 5.

Zur berührungslosen Identifizierung von Waren und Gegenständen aller Art werden häufig berührungslos auslesbare Datenträger, auch Transponder oder (engl.) "Tag" genannt, der RFID-Technologie eingesetzt. Wegen der höheren Reichweite werden anstelle von HF-RFID-Transpondern (HF = High Frequency) bei industriellen Anwendungen, insbesondere in automatisierten Fertigungsanlagen, vermehrt UHF-RFID-Systeme eingesetzt. Die dabei höhere Reichweite hat zum Nachteil, dass oft auch ungewollt mehrere Transponder gleichzeitig empfangen werden, beispielsweise auch infolge von sog. "Überreichweiten", die u.a. Folge von Reflexionen der elektromagnetischen Wellen an metallischen Oberflächen sein können. Für solche Fälle sind bekannte RFID-Schreib-/Lesegeräte (oft auch engl. "Reader" genannt) mit Filtereinrichtungen versehen, die dafür sorgen sollen, dass nur ein einziger, bestimmter Transponder an eine Anwendung, beispielsweise ein Steuerungsgerät für eine Automatisierungsaufgabe, weiter gemeldet wird. Solche Filter versuchen regelmäßig anhand von EmpfangsParametern, beispielsweise anhand einer Funksignal-Stärke, den der Anwendung und damit dem Schreib-/Lesegerät nächstliegenden der Transponder aus der Menge der empfangenen bzw. erfassten Transponder auszuwählen bzw. zu selektieren.

Mögliche Maßnahmen zur Erhöhung der Lesesicherheit und zum Selektieren des nächstliegenden Transponders sind im Stand der Technik beispielsweise eine dynamische Anpassung der Sendeleistung, ein Schwellwert ("Threshold") für die erwartete Mindest-Signalstärke ("RSSI") einer Transponder-Antwort, statistische Auswertungen über eine Lesehäufigkeit bei einer wiederholten Erfassung etc. Diese Maßnahmen sind als Filterkriterien und Filteralgorithmen in bekannten RFID-Schreib-/Lesegeräten umgesetzt, um von einer breit erfassten "Transponder-Population" den richtigen "richtigen", also für die jeweilige Anwendung relevanten Transponder zu selektieren, wobei es sich meist, wie gesagt, um den nächstliegenden der Transponder handeln sollte.

Die Schreib-/Lesegeräte, insbesondere die für den UHF-RFID-Frequenzbereich, werden häufig in stark "metallischen" Umgebungen eingesetzt. Beispielsweise in industriellen Anlagen und Bereichen mit Maschinen und dergleichen, die größere Flächen aus elektrisch leitfähigem Material (z. B. Blechverkleidungen) aufweisen, kommt es aufgrund der dadurch bedingten Reflexionen des Funksignals von und zu den drahtlosen Datenträgern (Transponder) oftmals zu Überreichweiten. Dies bedeutet, dass in ungünstigen Fällen auch entferntere Datenträger mit einer ähnlichen oder manchmal sogar mit einer besseren / höheren Empfangsfeldstärke erfasst werden, als die näherliegenden der Datenträger, die meist bevorzugt erfasst werden sollen. Zudem sind diese Reflexionen bzw. die dadurch bedingten Überreichweiten oft auch dynamisch, das heißt, dass durch nicht beeinflussbare Veränderungen der Umwelt, der Ausrichtung von Transponder-Antennen zu Reader-Antennen (die sog. "Konstellation") oder anderer Umstände sich das Reflexionsverhalten in der Anordnung und damit auch die Überreichweiten unkontrollierbar verändern können. Dies kann beispielsweise schon dadurch geschehen, dass ein zu identifizierendes Objekt mit dem zu identifizierenden Datenträger bewegt wird, was in den üblichen Produktionsprozessen fast immer der Fall ist. Aus diesen Gründen sind die geschilderten Verfahren zur Selektion des beabsichtigten (meist des räumlich nächstliegenden) Datenträgers, die meist auf einer Auswertung der Empfangsfeldstärke oder in artverwandter Weise auf einer Variation der verwendeten Sendeleistung des Schreib-/Lesegerätes beruhen, in Anordnungen mit reflexionsbedingten Überreichweiten oft nicht ausreichend zuverlässig.

Kurz gesagt gibt es im Stand der Technik bereits mehrere Verfahren zur Selektion eines gewünschten bzw. nächstliegenden Transponders, beispielsweise der Einsatz von verschiedenen Antennentypen, die jedoch schon bei der Montage eines Systems durch den Anwender geeignet auszuwählen sind, oder der Einsatz statistischer Auswertealgorithmen, oder Selektion anhand eines Empfangsfeldstärke-Wertes oder alternativ durch ein "Power-Ramping-Verfahren", oder auch eine Kombination der geschilderten Verfahren. Die damit erzielbaren Ergebnisse bieten insbesondere im industriellen Umfeld noch Raum für Verbesserungen.

Aus der Fachzeitschrift "ident" Nr. 4/2013 ist auf den Seiten 14 und 15 eine für den RFID-Einsatz geeignete Antenne bekannt, die wechselweise unterschiedliche Polarisationen verwenden kann, insbesondere eine horizontale oder vertikale lineare Polarisation oder eine rechts- oder linksdrehende zirkulare Polarisation. Aus dem Stand der Technik ist dabei bekannt, für eine möglichst vollständige Erfassung einer Anzahl (Population) von Datenträgern nacheinander mehrere Erfassungszyklen mit jeweils unterschiedlicher Antennenpolarisation durchzuführen, womit auch solche Datenträger, die in Relation zur Antenne räumlich ungünstig ausgerichtet oder weit entfernt sind, zuverlässig erfasst werden können.

Die Patentschrift WO2011/135329 beschreibt ein Verfahren zur Selektion zumindest eines aus einer Anzahl erfasster RFID-Transponder, wobei in einem Erfassungsbereich eines Schreib-/ Lesegerätes die Datenträger durch eine Anzahl Erfassungszyklen registriert werden, wobei zu jedem erfassten der Datenträger zumindest ein Empfangsparameter aufgezeichnet wird. Um den Empfang zu verbessern und alle RFID Tags zu registrieren, werden Phase, Frequenz und Polarisation gewechselt.

In Anordnungen, in denen die Datenträger (RFID-Transponder) stets eine definierte Ausrichtung in Bezug auf die Antenne des Schreib-/Lesegerätes haben, kann eine solche Multi-Polarisationsantenne fest auf denjenigen Modus eingestellt werden, der der ebenfalls festen Ausrichtung der Datenträger entspricht (statische Konstellation), womit in einigen Fällen die Selektion der Datenträger anhand der Empfangsfeldstärke-Messung und damit die Selektion der Datenträger mit der besten Empfangsfeldstärke gute Ergebnisse gezeigt, in Anordnungen mit wahlfrei ausgerichteten Datenträgern führt jedoch die Einstellung einer solchen Antenne auf eine bestimmte Polarisationsart zu weniger befriedigenden Ergebnissen bei der Selektion von Datenträgern.

Es ist also Aufgabe der vorliegenden Erfindung, die Selektion von Datenträgern (RFID-Transpondern) insbesondere in Umgebungen mit reflexionsbedingten Überreichweiten entfernterer Datenträger zu verbessern.

Die erfindungsgemäße Lösung dieser Aufgabe stützt sich auf die neue Erkenntnis, dass die an metallischen oder leitfähigen Oberflächen reflektierten Signale der Datenträger, die in erster Linie für die Überreichweiten im industriellen Umfeld verantwortlich sind, bei mehrfacher Erfassung (Inventarisierung, "Inventory") mit unterschiedlichen Antennenpolarisationen eine höhere Varianz der Empfangsfeldstärke bzw. der erforderlichen Sendefeldstärke aufweisen, als die auf direktem Wege empfangenen bzw. erfassten Datenträger. Erfindungsgemäß werden die Datenträger, also die "Population", daher mehrfach mit jeweils unterschiedlicher Antennenpolarisation erfasst, wobei derjenige oder diejenigen Datenträger als nächstliegend selektiert werden, die bei einer Vielzahl oder allen verwendeten Antennenpolarisationen entweder überhaupt empfangbar sind, oder durchgängig mit einer hohen Qualität empfangbar sind, während andere der Datenträger, die nur bei einer oder wenigen Antennenpolarisationen erfasst werden können bzw. nur bei einer oder weniger Antennenpolarisationen mit einem vergleichsweise guten Empfangsfeldstärke - Wert empfangbar sind (oder zumindest wesentlich schlechter als die erstgenannte Gruppe), mit hoher Wahrscheinlichkeit nicht oder kaum auf direktem Wege empfangen worden sind, sondern aufgrund einer reflexionsbedingten Überreichweite empfangen wurden und somit in den gebräuchlichen Anwendungsfällen nicht zu selektieren sind. Es kann also erfindungsgemäß durch eine statistische Auswertung über Empfangsparameter, insbesondere Empfangsfeldstärke oder "Erfassbarkeit", über mehrere Erfassungszyklen mit jeweils unterschiedlicher Antennenpolarisation eine statistische Aussage darüber getroffen werden, ob der jeweilige Datenträger vorwiegend direkt oder "indirekt" empfangen wurde, und somit eine Selektion des (oder einer Anzahl) vermutlich nächstliegenden Datenträgers vorgenommen werden.

Die Aufgabe wird insbesondere durch ein Verfahren gemäß dem Patentanspruch 1 und durch Schreib-/Lesegerät gemäß dem Patentanspruch 5 gelöst.

Dabei ist zur Lösung der Aufgabe ein Verfahren zur Selektion zumindest eines aus einer Anzahl erfasster drahtloser Datenträger vorgesehen, insbesondere zumindest eines aus einer Anzahl RFID-Transponder, wobei in einem Erfassungsbereich eines Schreib-/Lesegerätes die Datenträger durch eine Anzahl Erfassungszyklen registriert werden, wobei zu jedem erfassten der Datenträger zumindest ein Empfangsparameter aufgezeichnet wird, und wobei anhand einer Auswertung der aufgezeichneten Empfangsparameter zumindest einer der Datenträger selektiert wird. Dabei werden durch das Schreib-/Lesegerät mehrere Erfassungszyklen mit jeweils unterschiedlicher Antennenpolarisation durchgeführt, wobei für die erfassten Datenträger jeweils zumindest ein Empfangsparameter bei der Erfassung mit der jeweils verwendeten Antennenpolarisation aufgezeichnet wird, und wobei anhand einer statistischen Auswertung der bei den verschiedenen Antennenpolarisationen aufgezeichneten Empfangsparameter zumindest einer der erfassten Datenträger selektiert wird. Durch dieses Verfahren ist es möglich, die nächstliegenden der Datenträger, die also auch ohne eine Reflexion erfasst werden, zu selektieren, weil diese Datenträger mit nahezu jeder Antennenkonfiguration (Polarisation) gut erfasst werden.

Die Lösung der Aufgabe sieht außerdem ein Schreib-/Lesegerät zur Selektion zumindest eines aus einer Anzahl in einem Erfassungsbereich des Schreib-/Lesegerätes befindlicher Datenträger, insbesondere RFID-Transponder, vor, mit einer eingebauten oder mit dem Schreib-/Lesegerät verbundenen Antenne, wobei die Antenne zum wechselweisen Betrieb mit unterschiedlichen Antennenpolarisationen eingerichtet ist. Dabei weist das Schreib-/Lesegerät eine Auswerteeinheit zur Selektion zumindest eines der erfassten Datenträger mittels einem der vorstehend beschriebenen Verfahren auf. Mit einem solchen Schreib-/Lesegerät lassen sich die anhand des Verfahrens diskutierten Vorteile realisieren.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Schreib-/Lesegerät. Die diskutierten Merkmale können sowohl einzeln, als auch in Kombination miteinander angewendet werden.

Vorteilhaft wird der oder diejenigen der Datenträger selektiert, der oder die mit der höchsten Anzahl verschiedener Antennenpolarisationen erfassbar ist oder sind. Damit ergibt sich eine einfache Auswertung, weil keine Schwellwerte (beispielsweise für einen RSSI-Wert) definiert werden müssen, sondern die Unterscheidung zwischen "lesbar" und "nicht lesbar" ausreicht.

In einer weiteren Ausgestaltung werden mit jeder verwendeten Antennenpolarisation eine Mehrzahl Erfassungszyklen mit jeweils unterschiedlicher Sendeleistung des Schreib-/Lesegerätes durchgeführt, insbesondere mit stetig von Zyklus zu Zyklus ansteigender Sendeleistung ("Power-Ramping"), wobei für jeden erfassten Datenträger und für jede Antennenpolarisation diejenige Sendeleistung als Empfangsparameter erfasst wird, die mindestens zur erfolgreichen Erfassung des jeweiligen Datenträgers bei der jeweils verwendeten Antennenpolarisation erforderlich war. Im Unterschied zur zuvor diskutierten Variante wird hier also nicht ein auf die Funktion bezogener Grenzwert der empfangenen Signalstärke als "Empfangsparameter" verwendet, sondern hier wird eine Sendleistung, die dem jeweiligen Erfassungsvorgang zugeordnet ist, als Empfangsparameter verwendet.

Sofern mehrere verschiedene Funkkanäle (Sendefrequenzen) oder Frequenzbänder zur Auswahl stehen, wird vorteilhaft das Verfahren unter Verwendung unterschiedlicher Funkkanäle wiederholt durchgeführt, wobei die Erfassbarkeit der Datenträger bei einer möglichst hohen Anzahl verschiedener Funkkanäle, und/oder die bei dem jeweiligen Funkkanal und der dabei verwendeten Antennenpolarisation mindestens für eine erfolgreiche Erfassung erforderliche Sendeleistung als ein alternatives oder weiteres Kriterium für die Selektion oder Nicht-Selektion des jeweiligen Datenträgers verwendet wird. Es wird also zusätzlich zur Variierung der Polarisationsebenen noch über die Sendefrequenz variiert, was eine noch bessere Differenzierung der "räumlichen Nähe" der Datenträger ermöglicht.

Ein Ausführungsbeispiel des erfindungsgemäßen Verfahrens wird nachfolgend anhand der Figuren erläutert. Dies dient gleichzeitig der Erläuterung eines erfindungsgemäßen Schreib-/Lesegerätes.

Dabei zeigen:
- Figur 1: in schematischer Darstellung eine Anordnung mit einem Schreib-/Lesegerät mit drei Datenträgern und zwei Objekten mit reflektierenden Eigenschaftenund mit einer Anwendung, und
- Figur 2: eine Tabelle, in der die für die einzelnen Datenträger (Transponder) und die dabei verwendeten Antennenpolarisationen aufgezeichneten Empfangsparameter (hier: relativer Empfangsfeldstärke-Wert) verzeichnet sind.

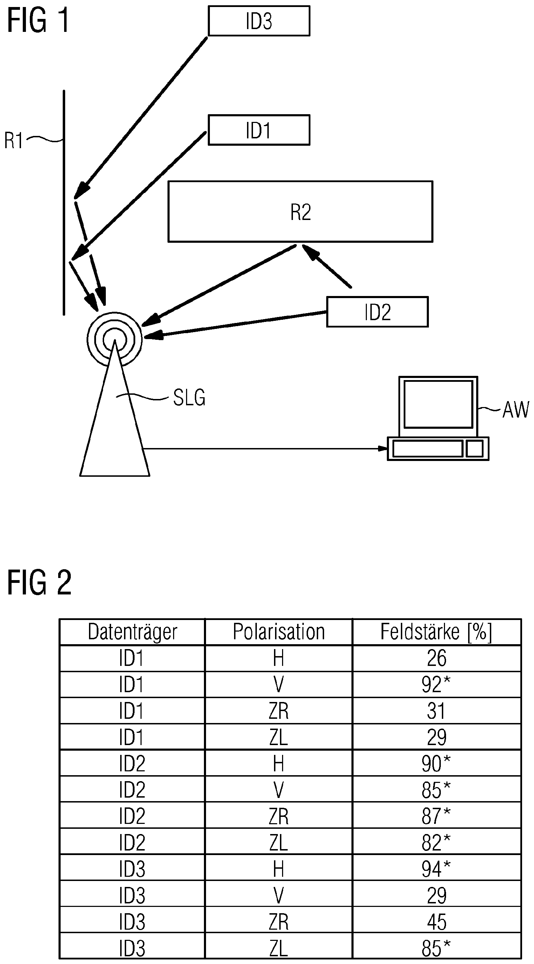

In der Figur 1 ist schematisch ein Schreib-/Lesegerät SLG dargestellt, welches mit einer eingebauten Antenne versehen ist, wobei die Antenne hinsichtlich ihres Strahlungsverhaltens zwischen horizontaler, vertikaler, rechts-zirkularer und links-zirkularer Polarisation umschaltbar ist. Das Schreib-/Lesegerät SLG ist mit einer Anwendung AW kommunikativ verknüpft, die auf einem Personal-Computer abläuft und die dazu bestimmt ist, bezogen auf den räumlich nächstliegenden Datenträger ID2 eine automatisierte Funktion oder dergleichen auszuführen. In einem räumlichen Empfangsfeld des Schreib-/Lesegerätes SLG sind die Datenträger ID1, ID2, ID3 angeordnet, wobei die in der Darstellung der Figur 1 sichtbaren Pfeile exemplarisch den Weg der elektromagnetischen Wellen (Funksignale) symbolisieren, die bei einer Erfassung oder Datenübertragung von den Datenträgern ID1, ID2, ID3 zu dem Schreib-/Lesegerät SLG bzw. dessen Antenne übertragen werden. Bei den Reflektoren R1, R2 handelt es sich um Maschinenteile, Maschinengehäuse oder sonstige leitfähige Gegenstände, die in der Lage sind, an ihrer Oberfläche elektromagnetische Wellen zu reflektieren; bei der hier gewählten Darstellung handelt es sich um eine qualitativ-schematische Abstrahierung, wobei in einer realen Anordnung weitaus komplexere Ausbreitungsmuster und räumliche Konstellationen gegeben sein können.

Im Folgenden sei angenommen, dass der Datenträger ID2 der räumlich nächstliegende Datenträger in Bezug auf das Schreib-/Lesegerät SLG ist, wobei jedoch je nach eingestellter Antennenpolarisation und abhängig von anderen Faktoren die Datenträger ID1, ID3 durchaus höhere Empfangsfeldstärken bei ihrer Erfassung erzeugen können.

Obwohl das hier schematisch dargestellte Schreib-/Lesegerät SLG über eine eingebaute umschaltbare Antenne verfügt, kann in einer alternativen Ausgestaltung auch eine externe Antenne vorgesehen sein, die hinsichtlich ihrer Polarisation bzw. hinsichtlich ihres Abstrahlverhaltens durch das Schreib-/Lesegerät SLG gesteuert wird. Überdies wird im Folgenden exemplarisch davon ausgegangen, dass das Schreib-/Lesegerät SLG die erfindungsgemäße Selektierung selbst vornimmt; in einer alternativen Ausgestaltung kann jedoch auch die Selektierung und damit die dazu erforderliche statistische Auswertung von Empfangsparametern durch eine externe Instanz erfolgen, beispielsweise durch die Anwendung AW; insofern ist die dann dort vorliegende Auswerteeinrichtung (zumeist in Form eines Software-Models) funktional und im Sinne der Erfindung dem Schreib-/Lesegerät SLG zuzuordnen.

Es wird nun exemplarisch davon ausgegangen, dass das Schreib-/Lesegerät SLG vier Erfassungszyklen zur "Inventarisierung" der Datenträger-Population (Datenträger ID1, ID2, ID3) vornimmt, und zwar für jede verfügbare Antennen-Polarisationsebene H, V, ZR, ZL (horizontal linear, vertikal linear, rechtsdrehend zirkular, linksdrehend zirkular) ein einzelner Erfassungszyklus, wobei für jeden Datenträger ID1, ID2, ID3 je ein Wert für die Feldstärke (Empfangsfeldstärke RSSI - Received signal strength indication) als Empfangsparameter registriert wird. Üblicherweise ist die Empfangsfeldstärke ein Wert, der in einem logarithmischen Maß (z.B. Dezibel-Milliwatt dBm) angegeben ist; für das hier gewählte Beispiel wird aus Gründen der Übersichtlichkeit der Wert in "Prozent" angegeben, bezogen auf einen definierten Maximalwert. In einer realen Anordnung würden üblicherweise anstelle eines einzigen Erfassungszyklus je Polarisationsebene eine Vielzahl Zyklen zeitnah durchgeführt, wobei die entsprechenden Empfangsparameter zu einem einzigen Resultat jeweils verarbeitet würden, beispielsweise durch Mittelwertbildung, gewichtete Mittelwertbildung, Auslassung von Extremwerten ("Ausreißern") und dergleichen.

In der Figur 2 sind die bei den geschilderten Erfassungszyklen aufgezeichneten Daten tabellarisch dargestellt, wobei diese Tabelle nach Datenträgern ID1, ID2, ID3 sortiert ist; die tatsächlichen Messungen finden jedoch praktischerweise getrennt nach Polarisationsebenen H, V, ZR, ZL statt, was bedeutet, dass zunächst bei mindestens einem Erfassungszyklus mit einer ersten Polarisationsebene (beispielsweise H - linear horizontal) die Empfangsparameter (hier: Empfangsfeldstärken) der drei Datenträger ID1, ID2, ID3 erfasst werden, danach bei mindestens einem weiteren Erfassungszyklus mit einer zweiten Polarisationsebene (beispielsweise V - linear vertikal) wiederum drei Empfangsparameter etc.

In der Tabelle der Figur 2 sind diejenigen Werte für die Feldstärke mit einem Stern gekennzeichnet, bei der die Feldstärke einen vorherbestimmten Qualitäts-Schwellwert (hier: 50 %) überschritten hat. In einer anderen Ausführungsform könnten auch solche Feldstärkewerte hervorgehoben bzw. nur solche aufgezeichnet sein, bei denen eine Erfassung des jeweiligen Datenträgers ID1, ID2, ID3 erfolgreich war; in einem solchen Fall hätte die Tabelle für den Datenträger ID1 nur einen Eintrag, für den Datenträger ID2 vier Einträge und für den Datenträger ID3 nur zwei Einträge.

Die in der Figur 2 dargestellten "Rohdaten" werden nun statistisch ausgewertet. In einem einfachen Ausführungsfall, bei dem lediglich auf die Erfassbarkeit (Empfangbarkeit) der jeweiligen Datenträger ID1, ID2, ID3 abgestellt wird, würde das bedeuten, dass der Datenträger ID1 nur bei einer Polarisationsebene empfangbar war (nämlich linear-vertikal), der Datenträger ID2 bei allen vier eingesetzten Polarisationsebenen, und der Datenträger ID3 bei zwei Polarisationsebenen. Bei einer derart basierenden Auswertung würde der Datenträger ID2 als der nächstliegende Datenträger selektiert, während der Datenträger ID1 als höchstwahrscheinlich fernliegender ausgefiltert würde, während der Datenträger ID3 je nach Auswerte-Strategie als vermutlich fernliegend oder als "indifferent" angesehen würde.

In einer alternativen Auswerte-Strategie kann beispielsweise die Varianz der Feldstärke-Werte betrachtet werden, wobei die Varianz für den Datenträger ID1 aus der Differenz zwischen 92 % (höchster Wert) und 26 % (niedrigster Wert) besteht, also 66 Prozentpunkte beträgt. Die Varianz für den Datenträger ID2 beträgt dagegen nur 8 Prozentpunkte, während die Varianz für den Datenträger ID3 65 Prozentpunkte beträgt. In diesem Auswerte-Szenario weist also der Datenträger ID2 die geringste Varianz auf und würde daher als nächstliegender Datenträger selektiert werden.

In der Praxis können auch andere statistische Auswertemethoden verwendet werden, zudem können auch weitere Variationen von Sendeparametern mit einfließen, also neben der beschriebenen Antennenpolarisation können auch beispielsweise die Sendeleistung, die Sendefrequenz oder andere Parameter variiert werden.

Unter Verwendung einer umschaltbaren Antennenpolarisation werden also die Datenträger ID1, ID2, ID3 in der Umgebung des Schreib-/Lesegerätes SLG mit jeweils einer der möglichen Polarisationsebenen H, V, ZR, ZL "gelesen" (erfasst), wobei davon ausgegangen wird, dass der oder die gewünschten Datenträger ID1, ID2, ID3 nicht nur mittels eines reflektierten Signals (Reflektor R1, R2) erfasst werden, sondern auch auf direktem Wege, so dass sie mit nahezu jeder Antennenkonfiguration gut gelesen werden können. Dadurch, dass sich Überreichweiten oft durch Reflexionen ergeben, sich die Reflexionsstruktur bzw. der Reflexionsgrad aber durch die Umschaltung der Polarisationsebenen jeweils deutlich ändert, sind je nach Konfiguration der Antenne (Polarisationsebenen) unterschiedliche Überreichweiten und damit z.B. unterschiedliche Empfangsfeldstärken zu erwarten. Anhand der "Lesehäufigkeit" oder anhand der gemessenen Empfangsfeldstärken kann dann der oder die gewünschten Transponder (Datenträger) statistisch ermittelt werden.

Insbesondere bedingt durch unterschiedliche Signaldämpfungen der Antennenkonfiguration je nach gewählter Polarisationsebene kann eine unterschiedliche Sendeleistung zur Erfassung der Datenträger je nach gewählter Polarisationsebene notwendig sein; eine Variierung der Sendeleistung, beispielsweise nach dem Prinzip des "Power-Ramping", kann daher sinnvoll sein. Während im Stand der Technik die hinsichtlich der Polarisationsebene umschaltbaren Antennen zur Erfassung möglichst vieler Datenträger einer Population verwendet werden, bewirkt die Nutzung unterschiedlicher Polarisationsebenen im Kontext der vorliegenden Erfindung eine Verbesserung bei der Selektion einzelner Transponder (Datenträger). Hiermit wird insbesondere das Problem der Überreichweiten in industriellen Anwendungen gelöst.

## Patentansprüche

1. Verfahren zur Selektion zumindest eines aus einer Anzahl erfasster drahtloser Datenträger (ID1, ID2, ID3), insbesondere zumindest eines aus einer Anzahl RFID-Transponder,
wobei in einem Erfassungsbereich eines Schreib-/Lesegerätes (SLG) die Datenträger (ID1, ID2, ID3) durch eine Anzahl Erfassungszyklen registriert werden,
wobei zu jedem erfassten der Datenträger (ID1, ID2, ID3) zumindest ein Empfangsparameter aufgezeichnet wird, und
wobei anhand einer Auswertung der aufgezeichneten Empfangsparameter zumindest einer der Datenträger (ID1, ID2, ID3) selektiert wird,
**dadurch gekennzeichnet,**
**dass** durch das Schreib-/Lesegerät (SLG) mehrere Erfassungszyklen mit jeweils unterschiedlicher Antennenpolarisation (H, V, ZR, ZL) durchgeführt werden,
wobei für die erfassten Datenträger (ID1, ID2, ID3) jeweils zumindest ein Empfangsparameter bei der Erfassung mit der jeweils verwendeten Antennenpolarisation (H, V, ZR, ZL) aufgezeichnet wird, und
**dass** anhand einer statistischen Auswertung der bei den verschiedenen Antennenpolarisationen (H, V, ZR, ZL) aufgezeichneten Empfangsparameter zumindest einer der erfassten Datenträger (ID1, ID2, ID3) selektiert wird.

2. Verfahren nach Patentanspruch 1,
**dadurch gekennzeichnet,**
**dass** der oder diejenigen der Datenträger (ID1, ID2, ID3) selektiert wird oder werden, der oder die mit der höchsten Anzahl verschiedener Antennenpolarisationen (H, V, ZR, ZL) erfassbar ist oder sind.

3. Verfahren nach einem der vorhergehenden Patentansprüche,
**dadurch gekennzeichnet,**
**dass** mit jeder verwendeten Antennenpolarisation (H, V, ZR, ZL) eine Mehrzahl Erfassungszyklen mit jeweils unterschiedlicher Sendeleistung des Schreib-/Lesegerätes (SLG) durchgeführt werden, insbesondere mit stetig von Zyklus zu Zyklus ansteigender Sendeleistung,
wobei für jeden erfassten Datenträger (ID1, ID2, ID3) und für jede Antennenpolarisation (H, V, ZR, ZL) diejenige Sendeleistung als Empfangsparameter erfasst wird, die mindestens zur erfolgreichen Erfassung des jeweiligen Datenträgers (ID1, ID2, ID3) bei der jeweils verwendeten Antennenpolarisation (H, V, ZR, ZL) erforderlich war.

4. Verfahren nach einem der vorhergehenden Patentansprüche,
**dadurch gekennzeichnet,**
**dass** das Verfahren unter Verwendung unterschiedlicher Funkkanäle wiederholt durchgeführt wird, wobei die Erfassbarkeit der Datenträger (ID1, ID2, ID3) bei einer möglichst hohen Anzahl verschiedener Funkkanäle, und/oder die bei dem jeweiligen Funkkanal und der dabei verwendeten Antennenpolarisation (H, V, ZR, ZL) mindestens für eine erfolgreiche Erfassung erforderliche Sendeleistung als ein alternatives oder weiteres Kriterium für die Selektion oder Nicht-Selektion des jeweiligen Datenträgers (ID1, ID2, ID3) verwendet wird.

5. Schreib-/Lesegerät (SLG) zur Selektion zumindest eines aus einer Anzahl in einem Erfassungsbereich des Schreib-/Lesegerätes (SLG) befindlicher Datenträger (ID1, ID2, ID3), insbesondere RFID-Transponder,
mit einer eingebauten oder mit dem Schreib-/Lesegerät (SLG) verbundenen Antenne, wobei die Antenne zum wechselweisen Betrieb mit unterschiedlichen Antennenpolarisationen (H, V, ZR, ZL) eingerichtet ist, und
wobei das Schreib-/Lesegerät (SLG) eine Auswerteeinheit zur Selektion zumindest eines der erfassten Datenträger (ID1, ID2, ID3) aufweist,
**dadurch gekennzeichnet,**
**dass** das Schreib-/Lesegerät (SLG) dazu eingerichtet ist, in einem ersten Schritt mehrere Erfassungszyklen mit jeweils unterschiedlicher Antennenpolarisation (H, V, ZR, ZL) durchzuführen, wobei für die erfassten Datenträger (ID1, ID2, ID3) jeweils zumindest ein Empfangsparameter bei der Erfassung mit der jeweils verwendeten Antennenpolarisation (H, V, ZR, ZL) aufgezeichnet wird, und
**dass** die Auswerteeinheit zu einer statistischen Auswertung der bei den verschiedenen Antennenpolarisationen (H, V, ZR, ZL) aufgezeichneten Empfangsparameter und dabei zur Selektierung zumindest eines der erfassten Datenträger (ID1, ID2, ID3) in einem zweiten Schritt eingerichtet ist.

6. Schreib-/Lesegerät (SLG) nach Patentanspruch 5,
**dadurch gekennzeichnet,**
**dass** die Auswerteeinheit derart eingerichtet ist, dass der oder diejenigen der Datenträger (ID1, ID2, ID3) selektiert wird oder werden, der oder die mit der höchsten Anzahl verschiedener Antennenpolarisationen (H, V, ZR, ZL) erfassbar ist oder sind.

7. Schreib-/Lesegerät (SLG) nach einem der Patentansprüche 5 oder 6,
**dadurch gekennzeichnet,**
**dass** vorgesehen ist, mit jeder verwendeten Antennenpolarisation (H, V, ZR, ZL) eine Mehrzahl Erfassungszyklen mit jeweils unterschiedlicher Sendeleistung des Schreib-/Lesegerätes (SLG) durchzuführen, insbesondere mit stetig von Zyklus zu Zyklus ansteigender Sendeleistung, wobei für jeden erfassten Datenträger (ID1, ID2, ID3) und für jede Antennenpolarisation (H, V, ZR, ZL) diejenige Sendeleistung als Empfangsparameter erfasst wird, die mindestens zur erfolgreichen Erfassung des jeweiligen Datenträgers (ID1, ID2, ID3) bei der jeweils verwendeten Antennenpolarisation (H, V, ZR, ZL) erforderlich war.

8. Schreib-/Lesegerät (SLG) nach einem der Patentansprüche 5 bis 7,
**dadurch gekennzeichnet,**
**dass** vorgesehen ist, das Verfahren unter Verwendung unterschiedlicher Funkkanäle wiederholt durchzuführen, wobei die Erfassbarkeit der Datenträger (ID1, ID2, ID3) bei einer möglichst hohen Anzahl verschiedener Funkkanäle, und/oder die bei dem jeweiligen Funkkanal und der dabei verwendeten Antennenpolarisation (H, V, ZR, ZL) mindestens für eine erfolgreiche Erfassung erforderliche Sendeleistung als ein alternatives oder weiterer Empfangsparameter und damit als Kriterium für die Selektion oder Nicht-Selektion des jeweiligen Datenträgers (ID1, ID2, ID3) verwendet wird.

## Claims

1. Method for selecting at least one from a number of detected wireless data media (ID1, ID2, ID3), in particular at least one from a number of RFID transponders,
wherein the data media (ID1, ID2, ID3) are registered in a detection area of a read/write device (SLG) by means of a number of detection cycles,
wherein at least one receive parameter is recorded for each of the detected data media (ID1, ID2, ID3), and wherein at least one of the data media (ID1, ID2, ID3) is selected on the basis of an evaluation of the recorded receive parameters, **characterized in that**
a plurality of detection cycles are carried out by the read/write device (SLG) in each case with a different antenna polarization (H, V, CR, CL), wherein at least one receive parameter is recorded in each case in the detection with the respectively used antenna polarization (H, V, CR, CL) for the detected data media (ID1, ID2, ID3), and
that at least one of the detected data media (ID1, ID2, ID3) is selected in each case on the basis of a statistical evaluation of the receive parameters recorded in the different antenna polarizations (H, V, CR, CL).

2. Method according to Patent Claim 1,
**characterized in that**
the data medium or data media (ID1, ID2, ID3) which is/are detectable with the highest number of different antenna polarizations (H, V, CR, CL) is selected.

3. Method according to either of the preceding patent claims,
**characterized in that**
a plurality of detection cycles are carried out with each antenna polarization (H, V, CR, CL) that is used, in each case with a different transmission power of the read/write device (SLG), in particular with a transmission power increasing constantly from cycle to cycle,
wherein the transmission power that was required at least for the successful detection of the respective data medium (ID1, ID2, ID3) in the respectively used antenna polarization (H, V, CR, CL) is detected as the receive parameter for each detected data medium (ID1, ID2, ID3) and for each antenna polarization (H, V, CR, CL) .

4. Method according to one of the preceding patent claims,
**characterized in that**
the method is carried out repeatedly using different radio channels, wherein the detectability of the data media (ID1, ID2, ID3) with the highest possible number of different radio channels and/or the transmission power required at least for a successful detection in the case of the respective radio channel and the antenna polarization (H, V, CR, CL) used therein is used as an alternative or additional criterion for the selection or non-selection of the respective data medium (ID1, ID2, ID3).

5. Read/write device (SLG) for selecting at least one from a number of data media (ID1, ID2, ID3), in particular RFID transponders, located within a detection area of the read/write device (SLG),
with an antenna that is built-in or connected to the read/write device (SLG), wherein the antenna is configured for alternate operation with different antenna polarizations (H, V, CR, CL), and
wherein the read/write device (SLG) has an evaluation unit for selecting at least one of the detected data media (ID1, ID2, ID3),
**characterized in that**
the read/write device (SLG) is configured to carry out a plurality of detection cycles in a first step, in each case with a different antenna polarization (H, V, CR, CL), wherein at least one receive parameter is recorded in each case for the detected data media (ID1, ID2, ID3) in the detection with the respectively used antenna polarization (H, V, CR, CL), and
the evaluation unit is configured for a statistical evaluation of the receive parameters recorded in the different antenna polarizations (H, V, CR, CL) and for selecting at least one of the detected data media (ID1, ID2, ID3) in a second step.

6. Read/write device (SLG) according to Patent Claim 5,
**characterized in that**
the evaluation unit is configured in such a way that the data medium or data media (ID1, ID2, ID3) detectable with the highest number of different antenna polarizations (H, V, CR, CL) is/are selected.

7. Read/write device (SLG) according to either of Patent Claims 5 and 6,
**characterized in that**
it is provided to carry out a plurality of detection cycles in each case with a different transmission power of the read/write device (SLG) with each antenna polarization (H, V, CR, CL), in particular with a transmission power increasing constantly from cycle to cycle, wherein the transmission power that was required at least for the successful detection of the respective data medium (ID1, ID2, ID3) in the respectively used antenna polarization (H, V, CR, CL) is detected as the receive parameter for each detected data medium (ID1, ID2, ID3) and for each antenna polarization (H, V, CR, CL).

8. Read/write device (SLG) according to one of Patent Claims 5 to 7,
**characterized in that**
it is provided to carry out the method repeatedly using different radio channels, wherein the detectability of the data media (ID1, ID2, ID3) with the highest possible number of different radio channels and/or the transmission power required at least for a successful detection in the case of the respective radio channel and the antenna polarization (H, V, CR, CL) used therein is used as an alternative or additional receive parameter and therefore as a criterion for the selection or non-selection of the respective data medium (ID1, ID2, ID3).

## Revendications

1. Procédé de sélection d'au moins l'un d'un certain nombre de supports (ID1, ID2, ID3) de données sans fil détectés, notamment d'au moins l'un d'un certain nombre de transpondeurs RFID, dans lequel on enregistre, dans une portée de détection d'un appareil (SLG) d'écriture/lecture, les supports (ID1, ID2, ID3) de données, par un certains nombre de cycles de détection,
dans lequel on enregistre au moins un paramètre de réception pour chaque support détecté, les supports (ID1, ID2, ID3) de données, et dans lequel on sélectionne au moins l'un des supports (ID1, ID2, ID3) de données à l'aide d'une exploitation du paramètre de réception enregistré,
**caractérisé**
**en ce que** l'on effectue, par l'appareil (SLG) d'écriture/lecture, plusieurs cycles de détection avec une polarisation (H, V, ZR, ZL) d'antenne différente,
dans lequel on enregistre, pour les supports (ID1, ID2, ID3) de données détectés, respectivement au moins un paramètre de réception lors de la détection avec la polarisation (H, V, ZR, ZL) d'antenne utilisée, et
**en ce qu'**à l'aide d'une exploitation statistique des paramètres de réception enregistrés pour les polarisations (H, V, ZR, ZL) d'antenne différentes, on sélectionne au moins l'un des supports (ID1, ID2, ID3) de données détectés.

2. Procédé suivant la revendication 1,
**caractérisé en ce que**
on sélectionne celui ou ceux des supports (ID1, ID2, ID3) de données, qui peut être détecté avec le plus grand nombre de polarisation (H, V, ZR, ZL) d'antenne différentes.

3. Procédé suivant l'une des revendications précédentes,
**caractérisé**
**en ce qu'**avec chaque polarisation (H, V, ZR, ZL) d'antenne utilisée, on effectue une multiplicité de cycles de détection à une puissance d'émission différente de l'appareil (SLG) d'écriture/lecture, en ayant notamment une puissance d'émission croissante, d'une manière continue, d'un cycle à l'autre,
dans lequel on détecte, pour chaque support (ID1, ID2, ID3) de données détecté et pour chaque polarisation (H, V, ZR, ZL) d'antenne, la puissance d'émission comme paramètre de réception qui était nécessaire au moins pour la détection couronnée de succès du support (ID1, ID2, ID3) de données à la polarisation (H, V, ZR, ZL) d'antenne utilisée.

4. Procédé suivant l'une des revendications précédentes,
**caractérisé**
**en ce qu'**on effectue le procédé en utilisant, de manière répétée, des canaux radio différents, la possibilité de détection des supports (ID1, ID2, ID3) de données, pour un nombre aussi grand que possible de canaux radio différents et/ou la puissance d'émission nécessaire au moins pour une détection couronnée de succès, pour le canal radio utilisé et la polarisation (H, V, ZR, ZL) d'antenne utilisée, étant utilisées comme une alternative ou un autre critère de sélection ou de non sélection du support (ID1, ID2, ID3) de données.

5. Appareil (SLG) d'écriture/lecture de sélection d'au moins l'un parmi un certain nombre de supports (ID1, ID2, ID3) de données, notamment de transpondeurs RFID, se trouvant dans une portée de détection de l'appareil (SLG) d'écriture/lecture, comprenant une antenne incorporée ou reliée à l'appareil (SLG) d'écriture/lecture, l'antenne étant conçue pour le fonctionnement en alternance avec des polarisations (H, V, ZR, ZL) d'antenne différentes, et l'appareil (SLG) d'écriture/lecture ayant une unité d'exploitation pour sélectionner au moins l'un des supports (ID1, ID2, ID3) de données détectés,
**caractérisé**
**en ce que** l'appareil (SLG) d'écriture/lecture est conçu pour effectuer, dans un premier stade, plusieurs cycles de détection avec une polarisation (H, V, ZR, ZL) d'antenne différente, dans lequel, pour les supports (ID1, ID2, ID3) de données détectés, respectivement au moins un paramètre de réception est enregistré lors de la détection avec la polarisation (H, V, ZR, ZL) d'antenne utilisée et
**en ce que** l'unité d'exploitation est conçue pour, dans un deuxième stade, exploiter statistiquement les paramètres de réception enregistrés aux polarisations (H, V, ZR, 2L) d'antenne différentes et pour sélectionner au moins l'un des supports (ID1, ID2, ID3) de données détectés.

6. Appareil (SLG) d'écriture/lecture suivant la revendication 5,
**caractérisé**
**en ce que** l'unité d'exploitation est conçue de manière à sélectionner celui ou ceux des supports (ID1, ID2, ID3) de données, qui peut être détecté avec le nombre le plus grand de polarisations (H, V, ZR, ZL) d'antenne différentes.

7. Appareil (SLG) d'écriture/lecture suivant l'une des revendications 5 ou 6,
**caractérisé**
**en ce qu'**il est prévu d'effectuer, avec chaque polarisation (H, V, ZR, ZL) d'antenne utilisée, une multiplicité de cycles de détection à une puissance d'émission différente de l'appareil (SLG) d'écriture/lecture, en ayant notamment une puissance d'émission constamment croissante d'un cycle à l'autre, dans lequel, pour chaque support (ID1, ID2, ID3) de données détectés et pour chaque polarisation (H, V, ZR, ZL) d'antenne, on détecte, comme paramètre de réception, la puissance d'émission qui était nécessaire à la détection couronnée de succès du support (ID1, ID2, ID3) de données à la polarisation (H, V, ZR, ZL) d'antenne utilisée.

8. Appareil (SLG) d'écriture/lecture suivant l'une des revendications 5 à 7,
**caractérisé**
**en ce qu'**il est prévu d'effectuer le procédé en utilisant, de manière répétée, des canaux radio différents, la possibilité de détection des supports (ID1, ID2, ID3) de données, pour un nombre aussi grand que possible de canaux radio différents, et/ou la puissance d'émission nécessaire au moins pour une détection couronnée de succès pour le canal radio utilisé et la polarisation (H, V, ZR, ZL) d'antenne utilisée étant utilisées comme une alternative ou un autre critère de sélection ou de non sélection du support (ID1, ID2, ID3) de données.
